(19) Europäisches Patentamt
European Patent Office
Office européen des brevets

(11) EP 3 621 132 B1

(12) # EUROPEAN PATENT SPECIFICATION

(45) Date of publication and mention of the grant of the patent:
**25.10.2023 Bulletin 2023/43**

(21) Application number: **19195631.7**

(22) Date of filing: **05.09.2019**

(51) International Patent Classification (IPC):
***H01M 4/133*** (2010.01) ***H01M 4/36*** (2006.01)
***H01M 4/587*** (2010.01) ***H01M 10/0525*** (2010.01)
***H01M 4/04*** (2006.01) ***H01M 4/1393*** (2010.01)

(52) Cooperative Patent Classification (CPC):
**H01M 4/366; H01M 4/0471; H01M 4/133; H01M 4/1393; H01M 4/587; H01M 10/0525;**
Y02E 60/10; Y02P 70/50

(54) **NEGATIVE ACTIVE MATERIAL FOR RECHARGEABLE LITHIUM BATTERY, METHOD FOR PREPARING SAME, NEGATIVE ELECTRODE INCLUDING THE SAME AND RECHARGEABLE LITHIUM BATTERY INCLUDING SAME**

NEGATIVES AKTIVMATERIAL FÜR WIEDERAUFLADBARE LITHIUMBATTERIE, VERFAHREN ZUR HERSTELLUNG DAVON, NEGATIVELEKTRODE DAMIT UND WIEDERAUFLADBARE LITHIUMBATTERIE DAMIT

MATÉRIAU ACTIF NÉGATIF POUR BATTERIE AU LITHIUM RECHARGEABLE, SON PROCÉDÉ DE PRÉPARATION, ÉLECTRODE NÉGATIVE LE COMPRENANT ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2018 KR 20180106955**

(43) Date of publication of application:
**11.03.2020 Bulletin 2020/11**

(73) Proprietor: **Samsung SDI Co., Ltd.**
**Gyeonggi-do 17084 (KR)**

(72) Inventors:
- **LEE, Eunjoo**
  **17084 Gyeonggi-do (KR)**
- **NAH, Jaehou**
  **17084 Gyeonggi-do (KR)**

(74) Representative: **Marks & Clerk LLP**
**15 Fetter Lane**
**London EC4A 1BW (GB)**

(56) References cited:
**WO-A1-2014/024473** **WO-A1-2018/012821**
**WO-A2-2010/041907** **CN-A- 106 663 808**
**JP-A- 2016 184 581** **US-A1- 2011 281 180**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 621 132 B1

## Description

## BACKGROUND OF THE INVENTION

### (a) Field of the Invention

A negative active material for a rechargeable lithium battery, a method for preparing the same, a negative electrode and a rechargeable lithium battery including the same are disclosed.

### (b) Description of the Related Art

Technology development for realizing high capacity of a rechargeable lithium battery has been continuously made due to an increasing demand on a mobile equipment or a portable battery.

As for a positive active material of a rechargeable lithium battery, a lithium-transition metal oxide having a structure capable of intercalating lithium ions such as $LiCoO_2$, $LiMn_2O_4$, $LiNi_{1-x}Co_xO_2$ ($0 \leq x < 1$), and the like has been used.

As for a negative active material, various types of carbon-based materials including artificial graphite, natural graphite, and hard carbon capable of intercalating and deintercalating lithium or Si-based active materials including Si and Sn have been used.

US 2011/281180 A1 and and JP 2016 184581 A relate to negative active materials for a rechargeable lithium battery.

## SUMMARY OF THE INVENTION

An embodiment is to provide a negative active material for a rechargeable lithium battery with a decreased thickness expansion due to a reduced side reaction with an electrolyte solution and improved cycle-life characteristics.

An embodiment is to provide a method for preparing the negative active material.

An embodiment is to provide a negative electrode including the negative active material.

An embodiment is to provide a rechargeable lithium battery including the negative electrode.

According to an embodiment, a negative active material for a rechargeable lithium battery includes spheroidized natural graphite including secondary particles in which a plurality of primary particles consisting of natural graphite are assembled; amorphous carbon on the surface of the primary particles; and a coating layer including amorphous carbon surrounding the secondary particles, wherein the primary particles have an average particle diameter of 5 μm to 15 μm, and the secondary particles have an average particle diameter of 8 μm to 24 μm.

The negative active material has a peak intensity ratio, I(002)/I(110) measured by an X-ray diffraction analysis method that is less than or equal to 120.

The natural graphite may be flake-shaped natural graphite.

The negative active material may have a pore volume fraction of less than or equal to 2 %.

The negative active material may have a pore volume fraction of 1.0 % 1.5 %.

The coating layer may have a thickness of 5 nm to 50 nm.

The negative active material may have a specific surface area (BET) of less than or equal to 10 $m^2/g$.

The negative active material may have tap density of 0.7 g/cc to 1.3 g/cc.

The negative active material includes the natural graphite and the amorphous carbon in a weight ratio of 90:10 to 75:25.

The amorphous carbon may be one of soft carbon, hard carbon, a mesophase pitch carbonized product, fired coke, and a mixture thereof.

According to another embodiment, a method of preparing a negative active material for a rechargeable lithium battery includes pulverizing natural graphite raw materials into primary particles having a small particle size; assembling the primary particles into secondary particles to spheroidize the same; adding an amorphous carbon precursor to the secondary particle to prepare a mixture; and heat-treating the mixture.

The natural graphite raw materials have a particle diameter of 80 μm to 140 μm, the primary particles may have a particle diameter of 5 μm to 15 μm, and the secondary particles have a particle diameter of 8 μm to 24 μm.

The negative active material includes the natural graphite and the amorphous carbon in a weight ratio of 90:10 to 75:25.

The amorphous carbon precursor may be one of a phenolic resin, a furan resin, an epoxy resin, polyacrylonitrile, a polyamide resin, a polyimide resin, a polyamideimide resin, synthetic pitch, petroleum-based pitch, coal-based pitch, tar, pitch carbon, and a combination thereof.

The heat-treating may be performed by maintaining the mixture in a furnace of about 1,000 °C to about 2,000

°C for about 1 hour to about 5 hours.

Another embodiment provides a negative electrode including the negative active material.

Another embodiment provides a rechargeable lithium battery including the negative electrode, a positive electrode including a positive active material, and an electrolyte.

By reducing an internal pore volume and a side reaction with an electrolyte, expansion of the negative active material may be suppressed and cycle-life characteristics may be improved.

At least some of the above and other features of the invention are set out in the claims.

## BRIEF DESCRIPTION OF THE DRAWINGS

FIG. 1A is a schematic view of a secondary particle of a negative active material according to an embodiment.
FIG. 1B is a schematic view of a secondary particle of a conventional negative active material.
FIG. 2 is a schematic view showing a structure of a rechargeable lithium battery according to an embodiment.

## DETAILED DESCRIPTION OF THE INVENTION

Hereinafter, embodiments of the present invention are described in detail. However, the present invention is not limited to these embodiments and the present invention is defined by the scope of claims.

Hereinafter, a negative active material according to an embodiment is described with reference to FIG. 1A. FIG. 1A is a schematic view of a secondary particle of a negative active material according to an embodiment.

The negative active material includes natural graphite including secondary particles 1 in which a plurality of primary particles 3 are assembled; amorphous carbon 5 on the surface of the primary particles 3; and a coating layer 7 including amorphous carbon surrounding the secondary particles 1, wherein the primary particles 3 have a particle diameter of about 5 μm to about 15 μm, and the secondary particles 1 have a particle diameter of about 8 μm to about 24 μm.

Graphite is a material which has been widely used as a negative active material, particularly, natural graphite has a high crystallinity, so it may accomplish an ideal capacity near to the theoretical capacity, compared with artificial graphite. Thereby, a negative active material may be obtained by filling the natural graphite in a high density. For example, as shown in FIG. 1B, the natural graphite 13 is generally not pulverized and is formed with large-sized particles having a particle diameter of about 40 μm to about 120 μm, so it needs to be subjected to a spheroidizing process, and in a case of a negative active material including the spheroidized natural graphite secondary particle 11 and an amorphous carbon coating layer 17 on a surface of the secondary particle, the internal structure is not dense, so residual stress is opened during charging and discharging a rechargeable lithium battery, causing a problem in that the negative active material is expanded. Thereby, internal pore volume of the negative active material is becoming larger, and a side reaction with an electrolyte is increased, so the rechargeable lithium battery may be deformed, and cycle-life thereof may be deteriorated.

According to an embodiment, by pulverizing natural graphite within the particle diameter range of the primary particles and spheroidizing secondary particles in which the primary particles are assembled, it may provide a negative active material in which cycle-life characteristics and internal expansion problem are improved as well as maintaining the high capacity characteristics of the natural graphite.

The primary particles have a particle diameter of about 5 μm to about 15 μm, and the secondary particle have a particle diameter of about 8 μm to about 24 μm.When the primary particle has an average particle diameter of less than about 5 μm, it is difficult to be produced by decreasing yields, and cycle-life characteristics of a battery is deteriorated. In addition, when the primary particle has a particle diameter of greater than 15 μm, a size of the secondary particles during producing the secondary particles is too large to be applied for a rechargeable lithium battery. In addition, when the secondary particle has a particle diameter of less than about 8 μm, a size of the pores formed during producing an electrode is excessively small, so the electrolyte impregnation may be deteriorated when applied for a battery. In addition, when the secondary particle diameter is greater than about 24 μm, a thickness of the negative electrode is too thick to be applied for a battery.

In addition, the primary particles may have a particle diameter of about 5 μm to about 15 μm, for example, about 5 μm to about 13 μm, about 5 μm to about 12 μm, or about 5.5 μm to about 11.5 μm and the secondary particle may have a particle diameter of about 8 μm to about 24 μm, for example about 10 μm to about 24 μm, about 11 μm to about 24 μm, about 12 μm to about 24 μm, about 13 μm to about 24 μm, about 13 μm to about 23 μm, or about 13 μm to about 20 μm. When the primary particles and the secondary particles have the ranged particle diameters, the expansion of the negative active material including the same may be more effectively suppressed, and a tap density of the negative active material may be enhanced. Each particle diameter of the primary particles and the secondary particles may be

an average particle diameter.

In this case, the average particle diameter is a value measured by adding a plurality of particles into a particle diameter analyzer and may be a particle diameter at a cumulative volume of 50 volume% (D50) in a cumulative size-distribution curve.

The secondary particle is formed by assembling a plurality of primary particles. The number of the assembled primary particles is not particularly limited, but the secondary particle may be formed by gathering, for example, about 2 to about 50, about 2 to about 40, about 2 to about 30, about 2 to about 20, about 2 to about 10, or about 2 to about 4 primary particles.

The natural graphite may be flake-shaped (needle shape, scale shape or flake type) natural graphite.

According to an embodiment, the negative active material includes amorphous carbon on the surface of the primary particles and amorphous carbon surrounding the secondary particles. A pore volume fraction in the secondary particle may be decreased, and the side reaction with an electrolyte may be suppressed by adding/coating amorphous carbon on a surface of the primary particles of natural graphite (inside of secondary particles) and on a surface of the secondary particles. Resultantly, the charge and discharge rate capability of a battery may be improved.

The negative active material may include the natural graphite and the amorphous carbon at a weight ratio of about 90:10 to about 75:25, for example, at a weight ratio of about 90:10 to about 80:20, about 90:10 to about 85:15, or about 90:10 to about 88:12. Within the range, the side reaction with an electrolyte may be more effectively suppressed, and the charge and discharge rate capability of a battery may be improved.

The coating layer including amorphous carbon may have a thickness of about 5 nm to about 50 nm, for example, about 10 nm to about 50 nm or about 20 nm to about 50 nm. Within the range, the side reaction with an electrolyte may be more effectively suppressed, and the charge and discharge rate capability may be improved.

The amorphous carbon may be one of soft carbon, hard carbon, a mesophase pitch carbonized product, fired coke, and a mixture thereof.

The negative active material according to an embodiment may have a peak intensity ratio I(002)/I(110) of less than or equal to about 120, for example, less than or equal to about 110, less than or equal to about 105, or less than or equal to about 100 when measured by an X-ray diffraction analysis method.

The peak intensity ratio I(002)/I(110) refers to a ratio of a diffraction peak intensity I(002) of plane (002) to a diffraction peak intensity !(110) of plane (110) of the negative active material measured by an X-ray diffraction analysis method, which is an index relating to an orientation of negative active material particles on the negative active material layer. As the peak intensity ratio I(002)/I(110) is going lower, crystal particles of the negative active material particles show a random orientation, but as the peak intensity ratio I(002)/I(110) is going higher, the crystal particles show an alignment parallel to the negative active material layer. In other words, as the peak intensity ratio is going lower, the edge surface of the natural graphite is orientated or aligned in a random direction, so random-orientation of the negative active material may be increased. Thereby, it may facilitate intercalation/deintercalation of lithium ions into natural graphite secondary particles, so as to improve the capacity characteristics and the charge and discharge rate capability of a rechargeable lithium battery employing the same.

The X-ray diffraction may be measured by using a CuK$\alpha$ ray as a target ray and the conditions for measuring X-ray diffraction known in the related art may be utilized. For example, the conditions may be power of 35kV to 55kV and 150mA and 250mA, a scan range of 20° to 80°, a time per step of 20s to 60s, and a step size (°/step) of 0.001 to 0.04. Furthermore, the peak intensity ratio is a relative value that is a diffraction peak intensity I(002) of a plane (002) to a diffraction peak intensity I(110) of a plane (110), so that even if the conditions are changed, the peak intensity ratio may be not extremely changed.

According to an embodiment, a negative active material is obtained by using natural graphite particles in which the crystal particles are isotropically grown, pulverizing the natural graphite into primary particles, and then assembling the same to secondary particles. Thereby it may effectively suppress that an orientation degree of the negative active material crystal particles is increased when manufacturing a negative electrode.

When the peak intensity ratio I(002)/I(110) is within the range, an expansion rate of the negative active material may be decreased. Resultantly, an internal pore volume of the negative active material and the side reaction with an electrolyte are decreased, so as to improve cycle-life characteristics of a battery.

A pore volume fraction of the negative active material may be less than or equal to about 2%, for example, less than or equal to about 1.8%, less than or equal to about 1.5%, about 1.0% to about 1.5% or about 1.0% to about 1.3%. When the pore volume fraction of the negative active material is within the range, the internal pore volume of the negative active material and the side reaction with an electrolyte may be decreased, so as to improve cycle-life characteristics of a battery.

Meanwhile, the pore volume fraction is measured as follows:

First, a charge and discharge-completed rechargeable lithium battery is discharged, and then dissembled to separate the negative active material layer from the negative electrode. A binder, an organic material, and the like included in the negative active material layer are removed and then dried to provide a powdery natural graphite negative active material.

The pore volume of natural graphite powder is measured and then multiplied by a true density of natural graphite to provide a pore volume fraction (%) of the secondary particles. In this case, amorphous carbons remained on the surface of the natural graphite primary particles (inside of secondary particles) and the surface of the secondary particles have the same true density as the natural graphite so do not need to be removed.

In this case, the negative active material may have a specific surface area (BET) of less than or equal to about 10 $m^2/g$, for example, less than or equal to about 8 $m^2/g$, less than or equal to about 6 $m^2/g$, or less than or equal to about 5 $m^2/g$. The specific surface area may be measured by a BET method. For example, a BET 6-point method may be used according to a nitrogen gas adsorption method by using a porosimetry analyzer (Belsorp-II Mini, Bell Japan Inc.). When the negative active material has the ranged specific surface area, the internal pore volume of the negative active material and the side reaction with an electrolyte may be decreased, so as to improve cycle-life characteristics of a battery.

The negative active material may have a tap density of about 0.7 g/cc to about 1.3 g/cc, for example, a tap density of about 0.9 g/cc to about 1.3 g/cc or about 1.1 g/cc to about 1.3 g/cc. The tap density may be measured by general techniques known in the related art. When the negative active material has the ranged tap density, the internal pore volume of the negative active material and the side reaction with an electrolyte may be decreased, so as to improve cycle-life characteristics of a battery.

Hereinafter, a method of manufacturing the negative active material is described.

Natural graphite raw materials having a particle diameter of greater than or equal to about 80 μm are pulverized into primary particles. The natural graphite raw materials may be pulverized into the primary particles by an airstream grinding method. The airstream grinding may be performed by grinding the natural graphite with airstream under conditions of about 5 $kg/cm^2$ to about 20 $kg/cm^2$ at a room temperature.

Thereby, the primary particles may have a particle diameter of about 5 to about 15 μm, for example, about 5 to about 13 μm, about 5 to about 12 μm, or about 5.5 to about 11.5 μm, so expansion of the negative active material using the same may more effectively suppressed, and a tap density of the negative active material may be enhanced.

Subsequently, a spheroidizing process is performed to assemble the small-size primary particles to secondary particles using a spheroidizing equipment.

Thereby, expansion of the negative active material is more effectively suppressed, and a tap density of the negative active material may be enhanced.

Subsequently, a mixing process of adding an amorphous carbon precursor to the obtained natural graphite secondary particles is performed.

The amorphous carbon precursor is not particularly limited as long as it is a material to be a carbonized product, and may be one of a phenolic resin, a furan resin, an epoxy resin, polyacrylonitrile, a polyamide resin, a polyimide resin, a polyamideimide resin, synthetic pitch, petroleum-based pitch, coal-based pitch, tar, pitch carbon, and a combination thereof.

In the mixing process, the amorphous carbon precursor may be added into the natural graphite secondary particles by adjusting a weight ratio of the natural graphite and the amorphous carbon to be included in the final product from about 90:10 to about 75:25, for example, at a weight ratio of about 90:10 to about 80:20, about 90:10 to about 85:15, or about 90:10 to about 88:12.

Thereby, an amount of adding the amorphous carbon into the secondary particles may be appropriately controlled, and the side reaction with an electrolyte may be reduced, and an inner density may be improved by decreasing the internal pore volume of the secondary particles. In addition, the coating layer having a thickness within the aforementioned range may be accomplished when the coating layer including amorphous carbon is formed on the surface of the secondary particles, thereby it may help to provide natural graphite secondary particles with structural stability and to suppress the expansion of the negative active material. Resultantly, cycle-life characteristics of a battery may be improved.

Subsequently, a negative active material according to an embodiment is prepared by performing a heat-treatment process of firing the secondary particles mixed with the amorphous carbon.

The heat-treatment process may be maintained in a furnace at about 1,000 °C to about 2,000 °C, for example, about 1,000 °C to about 1,800 °C, about 1,000 °C to about 1,600 °C, about 1,000 °C to about 1,400 °C, or about 1,200 °C to about 1,300 °C for about 1 hour to about 5 hours, for example, for about 1 hour to about 4 hours, about 1 hour to about 3 hours, or about 2 hours to about 3 hours. When the heat-treatment process satisfies the temperature range and the maintaining time range, the internal pore volume of the secondary particles and the side reaction with an electrolyte may be reduced, and the expansion of the negative active material may be suppressed. As the results, the cycle-life characteristics of a battery may be improved.

Another embodiment provides a negative electrode including the negative active material. The negative electrode is more specifically explained as follows: the negative electrode includes a negative active material layer including the negative active material and a current collector supporting the negative active material layer.

In the negative active material layer, the negative active material may be included in an amount of about 95

wt% to about 99 wt% based on the total weight of the negative active material layer.

In the negative active material layer, a content of the binder may be about 1 wt% to about 5 wt% based on a total weight of the negative active material layer. In addition, when the conductive material is further included, about 90 wt% to about 98 wt% of the negative active material, about 1 wt% to about 5 wt% of the binder, and about 1 wt% to about 5 wt% of the conductive material may be used.

The binder acts to adhere negative active material particles to each other and to adhere the negative active material to the current collector. The binder includes a non-aqueous binder, an aqueous binder, or a combination thereof.

The non-aqueous binder includes polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The aqueous binder may be a styrene-butadiene rubber, an acrylated styrene-butadiene rubber (SBR), an acrylonitrile-butadiene rubber, an acrylic rubber, a butyl rubber, polypropylene, an ethylene propylene copolymer, polyepichlorohydrin, polyphosphazene, polyacrylonitrile, polystyrene, an ethylene propylene diene copolymer, polyvinylpyridine, chlorosulfonated polyethylene, a latex, a polyester resin, an acrylic resin, a phenolic resin, an epoxy resin, polyvinyl alcohol, or a combination thereof.

When the aqueous binder is used as the negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. Such a thickener may be included in an amount of about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

Another embodiment provides a rechargeable lithium battery including the negative electrode, a positive electrode including a positive active material and an electrolyte solution.

The positive electrode may include a positive current collector and a positive active material layer formed on the positive current collector. The positive active material may include lithiated intercalation compounds that reversibly intercalate and deintercalate lithium ions. Specifically, one or more composite oxides of a metal selected from cobalt, manganese, nickel, and a combination thereof, and lithium. More specific examples may be compounds represented by one of the following chemical formulae. $Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $LiaNi_{1-b-c}Co_bX_cO_{2-\alpha}T_\alpha$ ($0.90 \le a \le 1.8$, $0 \le b \le 0.5$, $0 \le c \le 0.05$, $0 < \alpha \le 2$); $LiaNi_{1-b-c}Co_bX_cO_{2-\alpha}T_2$ ($0.90 \le a \le 1.8$, $0 \le b \le 0.5$, $0 \le c \le 0.05$, $0 < \alpha < 2$); $Li_aNi_{1-b-c}Mn_bX_cD_\alpha$ ($0.90 \le a \le 1.8$, $0 \le b \le 0.5$, $0 \le c \le 0.05$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.05$, $0 < \alpha \le 2$); $Li_aNi_{1-b-c}Mn_bX_cO_{2-\alpha}T_2$ ($0.90 \le a \le 1.8$, $0 \le b \le 0.5$, $0 \le c \le 0.05$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0 \le e \le 0.1$); $Li_aNi_bCo_cAl_dG_eO_2$ ($0.90 \le a \le 1.8$, $0 \le b \le 0.9$, $0 \le c \le 0.5$, $0 \le d \le 0.5$, $0 \le e \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$($0 \le f \le 2$); $Li_{(3-f)}Fe_2(PO_4)_3$ ($0 \le f \le 2$); $Li_aFePO_4$ ($0.90 \le a \le 1.8$)

In the chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating

method such as spray coating, dipping, and the like, but is not illustrated in more detail since it is well-known in the related field.

In the positive electrode, a content of the positive active material may be about 90 wt% to about 98 wt% based on the total weight of the positive active material layer.

In an embodiment of the present disclosure, the positive active material layer may further include a binder and a conductive material. Herein, each amount of the binder and the conductive material may be about 1 wt% to about 5 wt% based on the total weight of the positive active material layer.

The binder serves to attach positive active material particles to each other and to attach positive active material to the current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, carbon fiber and the like; a metal-based material of a metal powder or a metal fiber including copper, nickel, aluminium, silver, and the like; a conductive polymer such as a polyphenylene derivative; or a mixture thereof.

The current collector may include Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethylpropionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone and the like. The alcohol-based solvent includes ethyl alcohol, isopropyl alcohol, and the like, and examples of the aprotic solvent include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance, which may be understood by a person having an ordinary skill in this field.

In addition, the carbonate-based solvent may include a mixture of a cyclic carbonate and a chain-type carbonate. In this case, when the cyclic carbonate and the chain-type carbonate may be mixed together in a volume ratio of about 1:1 to about 1:9, performance of an electrolyte solution may be enhanced.

The organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 1.

[Chemical Formula 1]

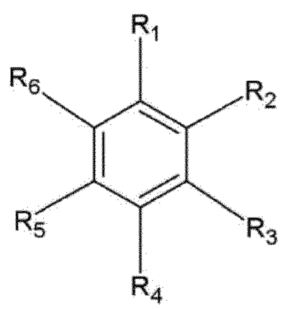

In Chemical Formula 1, $R_1$ to $R_6$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound of Chemical Formula 2 in order to improve a cycle-life of a battery.

[Chemical Formula 2]

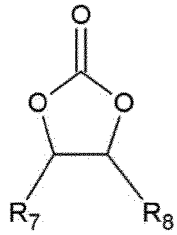

In Chemical Formula 2, $R_7$ and $R_8$ are the same or different and selected from hydrogen, a halogen, a cyano group (CN), a nitro group ($NO_2$), and a fluorinated C1 to C5 alkyl group, provided that at least one of $R_7$ and $R_8$ is selected from a halogen, a cyano group (CN), a nitro group ($NO_2$), and a fluorinated C1 to C5 alkyl group, and $R_7$ and $R_8$ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving a cycle-life may be used within an appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y,1}SO_2)$, wherein, x and y are natural numbers, for example an integer ranging from 1 to 20), LiCl, LiI, and $LiB(C_2O_4)_2$ (lithium bis(oxalato) borate, LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 2 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 2, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

**Example 1**

A graphite raw material having a particle diameter of greater than or equal to about 80 μm was grinded to small-size primary particles by airstream grinding. The small-size primary particles were processed to secondary particles using a spheroidizing equipment. Pitch carbon was added into the secondary particles and heat-treated in a furnace at 1,200 °C for 2 hours to provide a negative active material. In this case, the added amount of the pitch carbon was adjusted to be corresponded to a weight ratio of graphite/amorphous carbon of the obtained negative active material.

In this case, the used graphite, a size of the primary particle, a size of the secondary particle, a peak intensity ratio of I(002)/I(110), a weight ratio of graphite/amorphous carbon of the negative active material, and a thickness of the amorphous carbon coating layer of the secondary particle surface are each shown in Table 1.

The peak intensity ratio was obtained from a ratio of a diffraction peak intensity I(002) of a plane (002) to a diffraction peak intensity I(110) of a plane (110) of the negative active material measured by an X-ray diffraction analysis method. The X-ray diffraction was measured under the condition of power of 45kV and 200mA, a scan range of 20° to 80°, a time per step of 45s, and a step size (°/step) of 0.01.

97.5 wt% of the negative active material, 1.0 wt% of carboxymethyl cellulose, 1.5 wt% of styrene-butadiene were mixed in distilled water to provide a negative active material slurry composition.

The negative active material slurry composition was coated on a Cu current collector, dried, and then compressed to provide a negative electrode.

Using the negative electrode, a lithium metal counter electrode, and an electrolyte solution, a half-cell was manufactured. The electrolyte solution was prepared by dissolving 1M $LiPF_6$ in a mixed solvent of ethylene carbonate and dimethyl carbonate (a volume ratio of 3:7).

**Examples 2 to 4 and Comparative Examples 2 to 5**

A negative active material was manufactured, a negative electrode was manufactured, and a half-cell was manufactured in accordance with the same procedure as in Example 1, except that graphite used, the size of the primary particles, the size of the secondary particles, the peak intensity ratio of I(002)/I(110), the weight ratio of graphite/amorphous carbon of the obtained negative active material, and the thickness of the amorphous carbon coating layer of the secondary particle surface were changed as shown in Table 1.

**Comparative Example 1**

A negative active material was manufactured, a negative electrode was manufactured, and a half-cell was manufactured in accordance with the same procedure as in Example 1, except that a graphite raw material having a particle diameter of 80 μm or more was bent using a spheroidizing equipment to provide secondary particles, and the graphite used, the size of the primary particles, the size of the secondary particles, the peak intensity ratio of I(002)/I(110), the weight ratio of graphite/amorphous carbon of the obtained negative active material, and the thickness of the amorphous carbon coating layer of the secondary particle surface were changed as shown in Table 1.

Table 1

| | Type of graphite | Particle diameter of primary particles (μm) | Particle diameter of secondary particles (μm) | I(002)/I (110) peak intensity ratio | Weight ratio (natural graphite or artificial graphite/ amorphous carbon) (%) | Thickness of amorphous carbon coating layer (nm) |
|---|---|---|---|---|---|---|
| Example 1 | natural graphite | 7.0 | 15.6 | 120 | 90/10 | 23 |
| Example 2 | natural graphite | 5.8 | 13.1 | 118 | 85/15 | 11 |
| Example 3 | natural graphite | 8.2 | 17.3 | 107 | 75/25 | 48 |
| Example 4 | natural graphite | 11.5 | 19.7 | 98 | 80/20 | 26 |
| Comparative Example 1 | natural graphite | - | 11.3 | 161 | 95/5 | 27 |
| Comparative Example 2 | artificial graphite | 12.8 | 27.2 | 177 | 95/5 | 68 |

(continued)

| | Type of graphite | Particle diameter of primary particles (μm) | Particle diameter of secondary particles (μm) | I(002)/I (110) peak intensity ratio | Weight ratio (natural graphite or artificial graphite/ amorphous carbon) (%) | Thickness of amorphous carbon coating layer (nm) |
|---|---|---|---|---|---|---|
| Comparative Example 3 | artificial graphite | 10.8 | 25.8 | 142 | 70/30 | 11 |
| Comparative Example 4 | artificial graphite | 9.7 | 24.0 | 118 | 93/7 | 16 |
| Comparative Example 5 | natural graphite | 16.3 | 29.7 | 134 | 70/30 | 77 |

**Evaluation Example 1: Measurement of Thickness Expansion Rate of Half-cell**

The half cells obtained from Examples 1 to 4 and Comparative Examples 1 to 5 were charged and discharged at 45 °C and at 0.5 C for 25 cycles. A difference between the battery thickness before the charge and discharge and the battery thickness after the charge and discharge was obtained, and a thickness increase rate was calculated according to Equation 1. The results are shown in Table 2.

[Equation 1]

Thickness increase rate (%) = {(half-cell thickness after charge and discharge - half-cell thickness before charge and discharge)/half-cell thickness before charge and discharge} * 100

**Evaluation Example 2: Evaluation of Rate Capability**

The half-cells obtained from Examples 1 to 4 and Comparative Examples 1 to 5 were charged and discharged at 0.1C for the first cycle (1$^{st}$ cycle), and charged and discharged at 0.2C for the second cycle (2$^{nd}$ cycle), and then a 0.2C charge capacity was measured. Then, after being charged at 2.0 C and 0.01V cut-off, it was charged at 0.01C cut-off under a constant voltage condition and then discharged at 0.2C under 1.5V cut-off condition and a constant current condition to measure a 2C charge capacity. 2C charge capacity/0.2C charge capacity was obtained to evaluate a rate capability. The results are shown in Table 2.

**Evaluation Example 3: Measurement of Pore Volume Fraction (%)**

After disassembling the half-cell which had been charged and discharged for the initial first cycle according to Evaluation Example 2, the negative active material portion was separated from the electrode, and a binder and an organic material were removed to take a dried powdery sample for a BET analysis. A pore volume fraction (%) was calculated by multiplying a BJH desorption cumulative pore volume value measured using a BET equipment (ASAP 2020 V3.03 H) by a true density of the natural graphite. The results are shown in Table 2.

**Evaluation Example 4: Evaluation of High Temperature Cycle-life Characteristics**

The half-cells obtained from Examples 1 to 4 and Comparative Examples 1 to 5 were charged and discharged at 45 °C at 1.5C for 50 cycles. A ratio of the 50$^{th}$ discharge capacity to the first discharge capacity was obtained, and the results are shown in Table 2.

Table 2

| | Thickness expansion ratio (%) of half-cell | Pore volume fraction (%) | Rate capability (2C/ 0.2C)(%) | High temperature cycle-life (45 °C, 50th cycle) (%) |
|---|---|---|---|---|
| Example 1 | 5.9 | 1.0 | 40.1 | 91.3 |
| Example 2 | 6.1 | 1.3 | 38.6 | 90.7 |
| Example 3 | 5.7 | 1.1 | 41.4 | 91.4 |
| Example 4 | 4.7 | 1.0 | 44.3 | 90.1 |
| Comparative Example 1 | 7.5 | 3.5 | 24.2 | 88.7 |
| Comparative Example 2 | 6.3 | 1.2 | 23.0 | 87.5 |
| Comparative Example 3 | 10.4 | 5.6 | 28.9 | 87.2 |
| Comparative Example 4 | 7.7 | 4.2 | 35.1 | 88.1 |
| Comparative Example 5 | 6.7 | 1.8 | 22.7 | 86.3 |

Referring to Table 2, in cases of Examples 1 to 4 using natural graphite having a primary particle diameter of 5 μm to 15 μm and a secondary particle diameter of 8 μm to 24 μm and having a peak intensity ratio I(002)/I(110) of less than or equal to 120, it is confirmed that a thickness expansion ratio was low as 4.7 to 6.1 %, an initial rate capability was greater than or equal to 38%, and high temperature cycle-life characteristics were significantly high as greater than or equal to 90%. In addition, it is confirmed that the pore volume fraction in the negative active material was also decreased to less than or equal to 1.3 %.

On the other hand, although Comparative Examples 1 and 5 used natural graphite, the results were unsatisfactory. Specifically, as it was not pulverized to the small-size primary particles, and the peak intensity ratio I(002)/I(110) was greater than 120 in Comparative Example 1, the thickness expansion ratio was high as 7.5%, the initial rate capability was low as 24.2%, the high temperature cycle-life characteristics were low as 88.7%, and the pore volume fraction in the negative active material was high as 3.5%. In addition, Comparative Example 5 used primary particles and secondary particles having particle diameters of greater than 15 μm and 24 μm, respectively, and the I(002)/I(110) peak intensity ratio thereof was greater than 120, so it is confirmed that the initial charge and discharge rate capability was greatly low as 22.7%, and the high temperature cycle-life characteristics were low as 86.3%.

Furthermore, in Comparative Examples 2 to 4 using artificial graphite instead of natural graphite, as Comparative Example 4 used artificial graphite, it is confirmed that the thickness expansion ratio of the battery cell was 7.7% which was greatly high, and the high temperature cycle-life characteristics were decreased as 88.1%. As Comparative Example 2 used artificial graphite, and the secondary particles had a particle diameter of greater than 24 μm, it is confirmed that the thickness expansion ratio of the battery was high, and the rate capability and the high temperature cycle-life characteristics were deteriorated. In addition, as Comparative Example 3 used artificial graphite, the secondary particles had a particle diameter of greater than 24 μm, and the peak intensity ratio of I(002)/I(110) thereof was greater than 120, it is confirmed that the pore volume fraction and the thickness expansion ratio were the highest, and the high temperature cycle-life characteristics of the battery was greatly low.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims.

**<Description of symbols>**

| | | | |
|---|---|---|---|
| 1: | secondary particle | 3: | primary particle |
| 5: | amorphous carbon | 7: | coating layer |
| 11: | secondary particle | 13: | natural graphite |
| 17: | coating layer | | |
| 10: | positive electrode | 20: | negative electrode |

(continued)

| | | | |
|---|---|---|---|
| 30: | separator | 40: | electrode assembly |
| 50: | case | 100: | rechargeable lithium battery |

## Claims

1. A negative active material for a rechargeable battery, comprising

   spheroidized natural graphite comprising secondary particles (1) in which a plurality of primary particles (3) consisting of natural graphite are assembled;
   amorphous carbon on the surface of the primary particles (5); and
   a coating layer (7) comprising amorphous carbon surrounding the secondary particles (1),
   wherein the primary particles (3) have an average particle diameter of 5 μm to 15 μm, and
   the secondary particles (1) have an average particle diameter of 8 μm to 24 μm,
   wherein the average particle diameter is a value measured by adding a plurality of particles into a particle diameter analyzer and is a particle diameter at a cumulative volume of 50 volume% (D50) in a cumulative size-distribution curve,
   **characterized in that** the negative active material has a peak intensity ratio, I(002)/I(110), measured by an X-ray diffraction analysis method that is less than or equal to 120 and wherein the negative active material comprises the natural graphite and the amorphous carbon in a weight ratio of 90:10 to 75:25.

2. A negative active material according to claim 1, wherein the natural graphite is flake-shaped natural graphite.

3. A negative active material according to claim 1 or claim 2, wherein the negative active material has a pore volume fraction of less than or equal to 2 %.

4. A negative active material according to any one of claims 1 to 3, wherein the negative active material has a pore volume fraction of 1.0 % to 1.5 %.

5. A negative active material according to any one of claims 1 to 4, wherein the coating layer (7) has a thickness of 5 nm to 50 nm.

6. A negative active material according to any one of claims 1 to 5, wherein the negative active material has a specific surface area (BET) of less than or equal to 10 $m^2/g$.

7. A negative active material according to any one of claims 1 to 6, wherein the negative active material has tap density of 0.7 g/cc to1.3 g/cc.

8. A negative active material according to any one of claims 1 to 7, wherein the amorphous carbon is one of soft carbon, hard carbon, a mesophase pitch carbonized product, fired coke, and a mixture thereof.

9. A method of preparing a negative active material for a rechargeable lithium battery, comprising

   pulverizing natural graphite raw materials into primary particles having a small particle size;
   assembling the primary particles into secondary particles to spheroidize the same;
   adding an amorphous carbon precursor to the secondary particle to prepare a mixture; and
   heat-treating the mixture to prepare the negative active material according to any one of claims 1 to 8, and
   **characterized in that** the natural graphite raw materials have a particle diameter of 80 μm to 140 μm,
   the primary particles have a particle diameter of 5 μm to 15 μm, and
   the secondary particles have a particle diameter of 8 μm to 24 μm.

10. A method according to claim 9, wherein the amorphous carbon precursor is one of a phenolic resin, a furan resin, an epoxy resin, polyacrylonitrile, a polyamide resin, a polyimide resin, a polyamideimide resin, synthetic pitch, petroleum-based pitch, coal-based pitch, tar, pitch carbon, and a combination thereof.

11. A negative electrode comprising the negative active material according to any one of claims 1 to 10.

**12.** A rechargeable lithium battery comprising:

the negative electrode according to claim 11;
a positive electrode comprising a positive active material; and
an electrolyte.

## Patentansprüche

**1.** Negatives Aktivmaterial für eine wiederaufladbare Batterie, umfassend

sphäroidisierten natürlichen Graphit, der Sekundärteilchen (1) umfasst, in denen eine Vielzahl von Primärteilchen (3), die aus natürlichem Graphit bestehen, zusammengefügt sind;
amorphen Kohlenstoff an der Oberfläche der Primärteilchen (5); und
eine Überzugsschicht (7), die amorphen Kohlenstoff umfasst, welche die Sekundärteilchen (1) umgibt,
wobei die Primärteilchen (3) einen durchschnittlichen Teilchendurchmesser von 5 $\mu$m bis 15 $\mu$m besitzen, und die Sekundärteilchen (1) einen durchschnittlichen Teilchendurchmesser von 8 $\mu$m bis 24 $\mu$m besitzen,
wobei der durchschnittliche Teilchendurchmesser ein Wert ist, der durch Hinzufügen einer Vielzahl von Teilchen in einen Teilchendurchmesseranalysator gemessen wird, und ein Teilchendurchmesser bei einem kumulativen Volumen von 50 Volumenprozent (D50) in einer kumulativen Größenverteilungskurve ist,
**dadurch gekennzeichnet, dass** das negative Aktivmaterial ein Peakintensitätsverhältnis I(002)/I(110), gemessen durch ein Röntgenbeugungsanalyseverfahren, besitzt, das kleiner oder gleich 120 ist, und wobei das negative Aktivmaterial den natürlichen Graphit und den amorphen Kohlenstoff in einem Gewichtsverhältnis von 90:10 bis 75:25 umfasst.

**2.** Negatives Aktivmaterial nach Anspruch 1, wobei es sich bei dem natürlichen Graphit um flockenförmigen natürlichen Graphit handelt.

**3.** Negatives Aktivmaterial nach Anspruch 1 oder Anspruch 2, wobei das negative Aktivmaterial einen Porenvolumenanteil von weniger als oder gleich 2 % besitzt.

**4.** Negatives Aktivmaterial nach einem der Ansprüche 1 bis 3, wobei das negative Aktivmaterial einen Porenvolumenanteil von 1,0 % bis 1,5 % besitzt.

**5.** Negatives Aktivmaterial nach einem der Ansprüche 1 bis 4, wobei die Überzugsschicht (7) eine Dicke von 5 nm bis 50 nm besitzt.

**6.** Negatives Aktivmaterial nach einem der Ansprüche 1 bis 5, wobei das negative Aktivmaterial eine spezifische Oberfläche (BET) von weniger als oder gleich 10 $m^2$/g besitzt.

**7.** Negatives Aktivmaterial nach einem der Ansprüche 1 bis 6, wobei das negative Aktivmaterial eine Klopfdichte von 0,7 g/cc bis 1,3 g/cc besitzt.

**8.** Negatives Aktivmaterial nach einem der Ansprüche 1 bis 7, wobei der amorphe Kohlenstoff eines der Folgenden ist: weicher Kohlenstoff, harter Kohlenstoff, ein verkohltes Mesophasenpechprodukt, gebrannter Koks und eine Mischung davon.

**9.** Verfahren zur Herstellung eines negativen Aktivmaterials für eine wiederaufladbare Lithiumbatterie, Folgendes umfassend:

Pulverisieren von Rohmaterialien aus natürlichem Graphit zu Primärteilchen, die eine kleine Teilchengröße besitzen,
Zusammenfügen der Primärteilchen zu Sekundärteilchen, um diese zu sphäroidisieren;
Hinzufügen eines amorphen Kohlenstoffvorläufers zu den sekundären Teilchen, um eine Mischung herzustellen; und
Erhitzen des Gemischs zur Vorbereitung des negativen Aktivmaterials nach einem der Ansprüche 1 bis 8, und **dadurch gekennzeichnet, dass** die Rohmaterialien aus natürlichem Graphit einen Teilchendurchmesser von 80 $\mu$m bis 140 $\mu$m besitzen,

die Primärteilchen einen Teilchendurchmesser von 5 μm bis 15 μm besitzen, und
die Sekundärteilchen einen Teilchendurchmesser von 8 μm bis 24 μm besitzen.

**10.** Verfahren nach Anspruch 9, wobei es sich bei dem amorphen Kohlenstoffvorläufer um eines von einem Phenolharz, einem Furanharz, einem Epoxidharz, Polyacrylnitril, einem Polyamidharz, einem Polyimidharz, einem Polyamidimidharz, synthetischem Pech, Pech auf Erdölbasis, Pech auf Kohlebasis, Teer, Pech-Kohlenstoff oder einer Kombination davon handelt.

**11.** Negative Elektrode, umfassend das negative Aktivmaterial nach einem der Ansprüche 1 bis 10.

**12.** Wiederaufladbare Lithiumbatterie, Folgendes umfassend:

die negative Elektrode nach Anspruch 11;
eine positive Elektrode, die ein positives Aktivmaterial umfasst, und
einen Elektrolyten.

**Revendications**

**1.** Matériau actif négatif pour une batterie rechargeable, comprenant

un graphite naturel sphéroïdisé comprenant des particules secondaires (1) dans lesquelles sont assemblées une pluralité de particules primaires (3) constituées de graphite naturel ;
du carbone amorphe à la surface des particules primaires (5) ; et
une couche de revêtement (7) comprenant du carbone amorphe entourant les particules secondaires (1),
dans lequel les particules primaires (3) ont un diamètre moyen de particule de 5 μm à 15 μm, et
les particules secondaires (1) ont un diamètre moyen de particule de 8 μm à 24 μm,
dans lequel le diamètre moyen de particule est une valeur mesurée en ajoutant une pluralité de particules dans un analyseur de diamètre de particule et est un diamètre de particule à un volume cumulé de 50 % en volume (D50) dans une courbe de distribution de taille cumulée,
**caractérisé en ce que** le matériau actif négatif présente un rapport d'intensité de pic, I(002)/I(110), mesuré par un procédé d'analyse par diffraction des rayons X, inférieur ou égal à 120 et dans lequel le matériau actif négatif comprend le graphite naturel et le carbone amorphe dans un rapport de poids de 90:10 à 75:25.

**2.** Matériau actif négatif selon la revendication 1, dans lequel le graphite naturel est un graphite naturel en forme de paillettes.

**3.** Matériau actif négatif selon la revendication 1 ou la revendication 2, dans lequel le matériau actif négatif a une fraction de volume de pore inférieure ou égale à 2 %.

**4.** Matériau actif négatif selon l'une des revendications 1 à 3, dans lequel le matériau actif négatif a une fraction de volume de pore de 1,0 % à 1,5 %.

**5.** Matériau actif négatif selon l'une des revendications 1 à 4, dans lequel la couche de revêtement (7) a une épaisseur de 5 nm à 50 nm.

**6.** Matériau actif négatif selon l'une des revendications 1 à 5, dans lequel le matériau actif négatif a une surface spécifique (BET) inférieure ou égale à 10 $m^2/g$.

**7.** Matériau actif négatif selon l'une des revendications 1 à 6, dans lequel le matériau actif négatif a une densité après tassement de 0,7 g/cc à 1,3 g/cc.

**8.** Matériau actif négatif selon l'une des revendications 1 à 7, dans lequel le carbone amorphe est l'un parmi un carbone mou, un carbone dur, un produit carbonisé en phase mésophase, du coke cuit et un mélange de ceux-ci.

**9.** Procédé de préparation d'un matériau actif négatif pour une batterie rechargeable au lithium, comprenant les étapes consistant à

pulvériser des matières premières de graphite naturel en particules primaires de petite taille ;
assembler les particules primaires en particules secondaires pour les sphéroïdiser ;
ajouter un précurseur de carbone amorphe à la particule secondaire pour préparer un mélange ; et
effectuer un traitement thermique du mélange pour préparer le matériau actif négatif selon l'une des revendications 1 à 8, et
**caractérisé en ce que** les matières premières de graphite naturel ont un diamètre de particule de 80 μm à 140 μm,
les particules primaires ont un diamètre de particule compris entre 5 μm et 15 μm, et
les particules secondaires ont un diamètre de particule compris entre 8 μm et 24 μm.

**10.** Procédé selon la revendication 9, dans lequel le précurseur de carbone amorphe est une résine phénolique, une résine furanique, une résine époxy, un polyacrylonitrile, une résine polyamide, une résine polyimide, une résine polyamideimide, un brai synthétique, un brai à base de pétrole, un brai à base de charbon, du goudron, du carbone de brai, et une combinaison de ceux-ci.

**11.** Électrode négative comprenant le matériau actif négatif selon l'une des revendications 1 à 10.

**12.** Batterie rechargeable au lithium comprenant :

l'électrode négative selon la revendication 11 ;
une électrode positive comprenant un matériau actif positif ; et
un électrolyte.

FIG. 1A

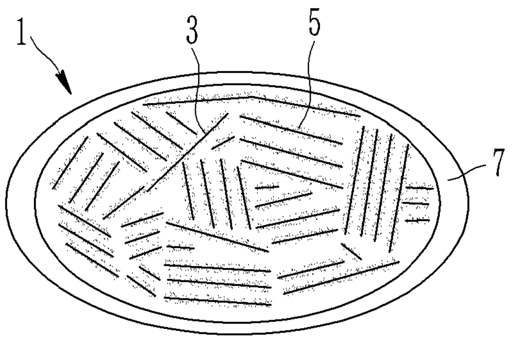


FIG. 1B

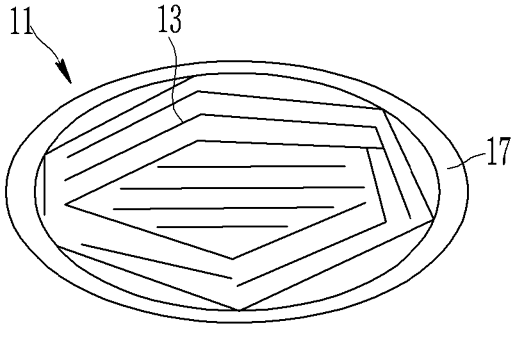

FIG. 2

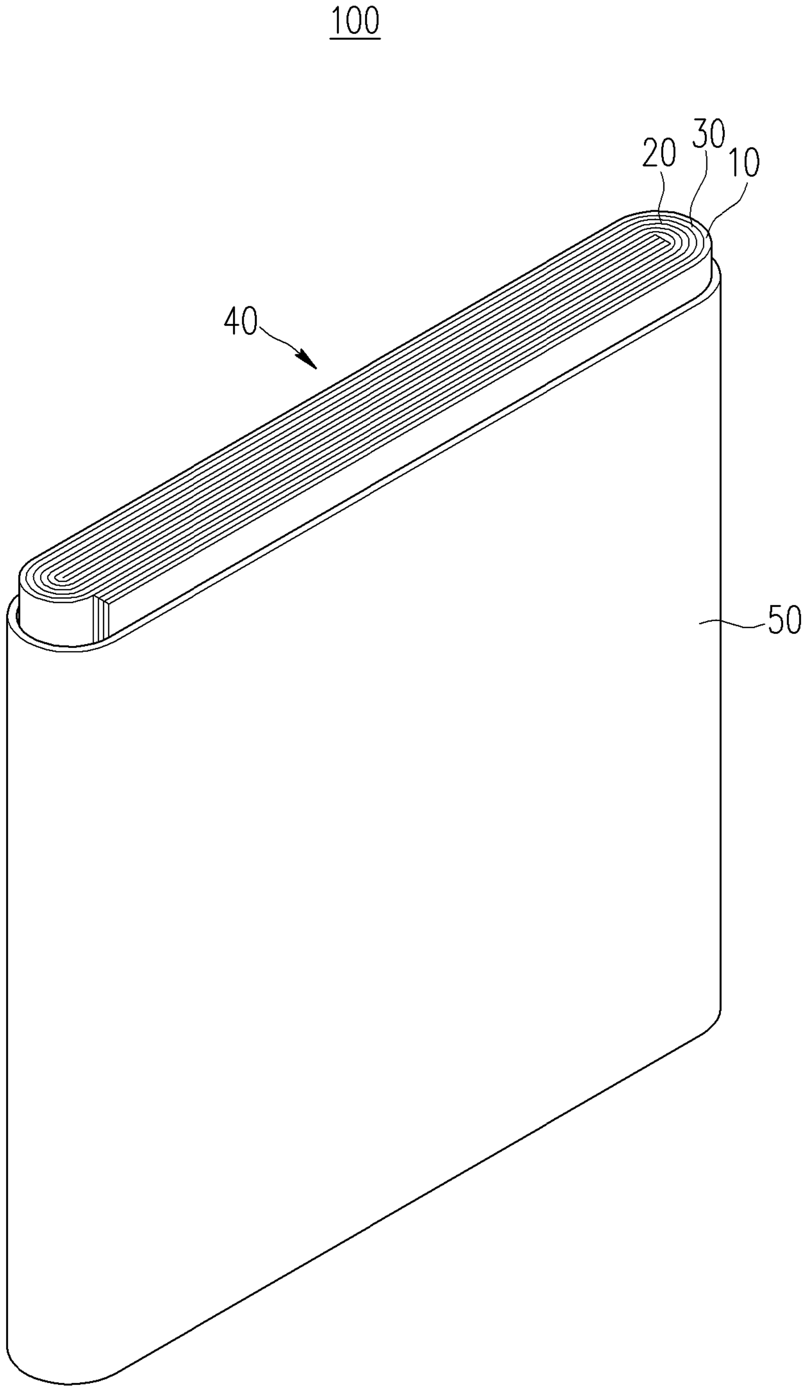

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2011281180 A1
- JP 2016184581 A